# EUROPÄISCHE PATENTSCHRIFT

(11) **EP 1 651 884 B1**
(45) Veröffentlichungstag und Bekanntmachung des Hinweises auf die Patenterteilung: **17.06.2009**
(21) Anmeldenummer: 04766386.9
(22) Anmeldetag: 30.07.2004
(51) Int. Cl.: F16F 13/14

(54) **HYDRAULISCH DÄMPFENDE LAGERBUCHSE**
HYDRAULICALLY DAMPENING BEARING BUSH
DOUILLE-PALIER D'AMORTISSEMENT HYDRAULIQUE

(30) Priorität: 06.08.2003 DE 10336094
(43) Veröffentlichungstag der Anmeldung: 03.05.2006
(73) Patentinhaber: Trelleborg Automotive Technical Centre GmbH, 56203 Höhr-Grenzhausen (DE)
(72) Erfinder: GRAEVE, Arndt, 56072 Koblenz (DE)
(74) Vertreter: Preissner, Nicolaus
(86) Internationale Anmeldenummer: PCT/EP2004/051678
(87) Internationale Veröffentlichungsnummer: WO 2005/015053

(56) Entgegenhaltungen:
- PATENT ABSTRACTS OF JAPAN Bd. 016, Nr. 529 (M-1332), 29. Oktober 1992 (1992-10-29) -& JP 04 194430 A (TOKAI RUBBER IND LTD), 14. Juli 1992 (1992-07-14)
- PATENT ABSTRACTS OF JAPAN Bd. 2003, Nr. 12, 5. Dezember 2003 (2003-12-05) -& JP 2004 060680 A (NOK CORP), 26. Februar 2004 (2004-02-26)
- PATENT ABSTRACTS OF JAPAN Bd. 013, Nr. 373 (M-861), 18. August 1989 (1989-08-18) & JP 01 126453 A (TOKAI RUBBER IND LTD), 18. Mai 1989 (1989-05-18)
- PATENT ABSTRACTS OF JAPAN Bd. 1996, Nr. 03, 29. März 1996 (1996-03-29) & JP 07 293627 A (TOKAI RUBBER IND LTD), 7. November 1995 (1995-11-07)

## Beschreibung

Die Erfindung betrifft eine hydraulisch dämpfende Lagerbuchse mit einem hülsenförmigen Innenteil, dass in ein Buchsengehäuse einführbar ist und an dem ein einteiliger Tragkörper aus einem elastomeren Material angeordnet ist, der einen Lagerkem abstützt, wobei eine flüssigkeitsgefüllte Arbeitskammer und eine Ausgleichskammer vorgesehen sind, die über einen Kanal miteinander verbunden sind, und wobei die Ausgleichskammer durch eine Ausgleichsmembran aus einem elastomeren Material begrenzt ist und das Innenteil in ein erstes Teil und ein zweites Teil unterteilt ist.

Hydraulisch dämpfende Lagerbuchsen, die auch als Hydrobuchsen bezeichnet werden, kommen bei der Lagerung von Motoren in Fahrzeugen zum Einsatz.

Eine Lagerbuchse der eingangs genannten Art ist aus der WO 03/025419 A1 bekannt. Die Lagerbuchse weist ein hülsenförmiges Innenteil auf, das in ein Buchsengehäuse einführbar ist. Das Innenteil baut sich aus einem hohlzylinderförmigen Buchsenkäfig auf, an dem ein sich segmentartig in Umfangsrichtung erstreckender Kunststoffeinsatz aufgenommen ist. An dem Kunststoffeinsatz ist ein Entkopplungskäfig zur Aufnahme der Entkopplungsmembran ausgebildet. Der aus elastomerem Material hergestellte einteilige Tragkörper, der einen Lagerkern abstützt, ist an dem Buchsenkäfig anvulkanisiert. Eine Ausgleichsmembran, die die Ausgleichskammer begrenzt, ist einteilig mit dem Tragkörper ausgebildet. Die Herstellung der bekannten Lagerbuchse ist relativ aufwendig, da ein Käfig hergestellt werden muss, in dem die Arbeitskammer und die Ausgleichskammer ausgebildet sind. Zur Herstellung der Teile ist ein aufwendiges Tiefziehverfahren mit entsprechenden Werkzeugen erforderlich.

Aus der DE 41 11 318 A1 ist eine hydraulisch dämpfende Lagerbuchse bekannt, bei der das Innenteil aus einem oberen Abschnitt und einem unteren Abschnitt besteht. Dieses Innenteil ist in ein Buchsengehäuse einführbar. Zur Abstützung eines Lagerkems gegen das Innenteil sind zwei Tragkörper aus elastomerem Material mit unterschiedlichen Federkonstanten vorgesehen. Dabei ist der erste Tragkörper unterhalb des Lagerkörpers angeordnet und mit dem als Unterteil dienenden unteren Abschnitt verbunden. Der zweite Tragkörper ist oberhalb des Lagerkörpers abgeordnet und mit dem als zweitem Teil dienenden oberen Abschnitt verbunden. Weiter sind eine flüssigkeitsgefüllte Arbeitskammer und eine Ausgleichskammer vorgesehen, die über einen Kanal miteinander verbunden sind. Die Ausgleichskammer wird durch eine Ausgleichsmembran begrenzt, die an einer separaten Haltevorrichtung aus Kunststoff vorgesehen ist. Durch die mehrteilige Ausgestaltung des Innenteils und des Tragkörpers ergibt sich ein relativ komplizierter Aufbau, der den Herstellungsaufwand erhöht.

Der Erfindung liegt die **Aufgabe** zugrunde, eine hydraulisch dämpfende Lagerbuchse vorzuschlagen, bei der ein funktionsgerechter Materialeinsatz vorgenommen werden kann und die auf einfache Weise an viele unterschiedliche Einsatzzwecke angepasst werden kann.

Zur Lösung dieser Aufgabe wird bei einer hydraulisch dämpfenden Lagerbuchse der eingangs genannten Art vorgeschlagen, dass die beiden Teile jeweils halbschalenförmig ausgebildet und an sich gegenüberliegenden Auflageflächen miteinander verbunden sind und dass an dem ersten Teil der Tragkörper und an dem zweiten Teil die Ausgleichsmembran anvulkanisiert ist.

Durch die horizontale Trennung des hülsenförmigen Innenteils in zwei halbschalenförmige Teile und die separate Zuordnung des Tragkörpers und der Ausgleichsmembran zu verschiedenen Teilen des Innenteils wird ein modularer Aufbau erzielt, der eine einfache Kombination verschiedener Buchsenteile ermöglicht. Hierdurch ergibt sich ein breites Einsatzfeld. Weiterhin ermöglicht der vorgeschlagene konstruktive Aufbau, dass unterschiedliche elastomere Materialien für den Tragkörper und die Ausgleichsmembran verwendet werden. So kann beispielsweise der lediglich zu einem ersten Teil des Innenteils verbundene Tragkörper aus Naturkautschuk bestehen, während die mit dem zweiten Teil verbundene Ausgleichskammer aus EPDM hergestellt ist. Schliesslich ermöglicht es die Zuordnung des Tragkörpers lediglich zu einem Bauteil des Innenteils, dass beim Zusammenbau des Innenteils eine Vorspannung des Tragkörpers erzielt wird. Ein weiterer Vorteil ergibt sich durch die vereinfachte Herstellung einer modularen Lagerbuchse, da sich beide Teile des Innenteils in radialer Richtung aus der Herstellungsform entfernen lassen.

Vorteilhafte Ausgestaltungen sind in den Unteransprüchen angegeben.

Vorteilhaft weist das erste und das zweite Teil mindestens ein formschlüssiges Verbindungselement und eine zugeordnete Aufnahme für das Verbindungselement auf. Dadurch wird eine sichere formschlüssige Verbindung zwischen den beiden Teilen des Innenteils geschaffen, die ein Verrutschen der Teile zueinander nach dem Einbau in das Buchsengehäuse wirksam u n-terbindet und die Funktionsfähigkeit der Lagerbuchse gewährleistet.

In einer vorteilhaften Ausgestaltung ist der in dem ersten und zweiten Teil eingebrachte Kanal beim Zusammensetzen des ersten und zweiten Teils mittels einer Kanalverbindung verbindbar.

In vorteilhafter Weiterbildung weist die Kanalverbindung eine Kanalverbindungsdichtung auf.

In einer weiteren vorteilhaften Ausgestaltung der Erfindung ist der im Innenteil ausgebildete Kanal an seinen Längskanten mit Kanaldichtungen ausgestattet, die den Kanal zum äusseren Buchsengehäuse abdichten. Somit wird ein Austreten von Flüssigkeit aus dem Kanal und der Arbeitskammer und Ausgleichskammer verhindert. Die Kanaldichtungen sind derart ausgebildet, dass beim Einschieben des zusammengesetzten Innenteils in das Buchsengehäuse abgedichtete Kammern und ein abgedichteter Kanal gebildet werden.

In vorteilhafter Ausgestaltung kann vorgesehen sein, dass das erste und das zweite Teil identisch ausgebildet sind. Hierdurch ergibt sich eine Kostenersparnis, da die beiden Teile des Innenteils mit den gleichen Form-Werkzeugen hergestellt werden können. Eines der identischen Teile wird um 180° gedreht, so dass jeweils ein Verbindungselement und eine Aufnahme für ein Verbindungselement einander gegenüberliegen. Ebenso liegen dann die Kanalverbindungsaustritte der beiden Teile übereinander und können funktionsgerecht zusammengesetzt werden.

Durch den zweigeteilten Aufbau der erfindungsgemässen Lagerbuchse wird es ermöglicht, an den beiden Teilen unterschiedliche elastomere Materialien zu verwenden. Vorzugsweise ist der Tragkörper, der den Lagerkem abstützt, aus Naturkautschuk hergestellt. Dadurch können die Vorteile von Naturkautschuk, insbesondere die Haltbarkeit und die dauerhafte Elastizität, für die Lagerung des Lagerkerns durch die Tragkörper ausgenutzt werden. An die Gummimischung der Ausgleichsmembran des anderen Teils werden andere Anforderungen gestellt, so dass hier ein anderes elastomeres Material, vorzugsweise EPDM, auf Grund der reduzierten Permeabilität eingesetzt wird.

Ein weiterer Vorteil des modularen Aufbaus ergibt sich dadurch, dass beispielsweise das erste Teil mit dem Tragkörper für viele Einsatzzwecke gleich ausgebildet sein kann. Das zweite Teil mit der anvulkanisierten Ausgleichsmembran kann für verschiedene Anforderungen andersartig ausgebildet sein. Beispielsweise lässt sich somit die Geometrie der Ausgleichskammer und der Kanalführung im zweiten Teil verändern, ohne Veränderungen am ersten Teil vornehmen zu müssen, wodurch sich letztlich höhere Stückzahlen realisieren lassen und somit die Herstellungskosten reduziert werden können. Ausserdem bietet das modulare Lagerbuchsenkonzept eine hohe Variabilität, da auch das zweite Teil für verschiedene Lagerbuchsen verwendet werden kann.

In einer weiteren vorteilhaften Ausgestaltung der Erfindung wird der Tragkörper des ersten Teils beim Zusammenbau mit dem zweiten Teil vorgespannt. Hierdurch werden Freiwege in Zugrichtung verringert oder beseitigt.

Nachfolgend wird die Erfindung an Hand eines Ausführungsbeispieles näher erläutert, das in den Zeichnungen in schematische Weise dargestellt ist. Es zeigen:
- Fig. 1: eine perspektivische Ansicht eines Innenteils einer erfindungsgemässen Lagerbuchse ohne Tragkörper und Lagerkem und des Buchsengehäuses;
- Fig. 2: eine perspektivische Ansicht eines zweiten und ersten Teils der Lagerbuchse;
- Fig. 3: eine Ansicht des Innenteils von vorn;
- Fig. 4: eine Ansicht des Innenteils von oben;
- Fig. 5: eine Schnittdarstellung entlang der Schnittlinie A-A gemäss Fig. 4;
- Fig. 6: eine Schnittdarstellung durch ein zweites Teil entlang der Schnittlinie B-B gemäss Fig. 4;
- Fig.7: eine Schnittdarstellung durch ein erstes Teil entlang der Schnittlinie B-B gemäss Fig. 4.

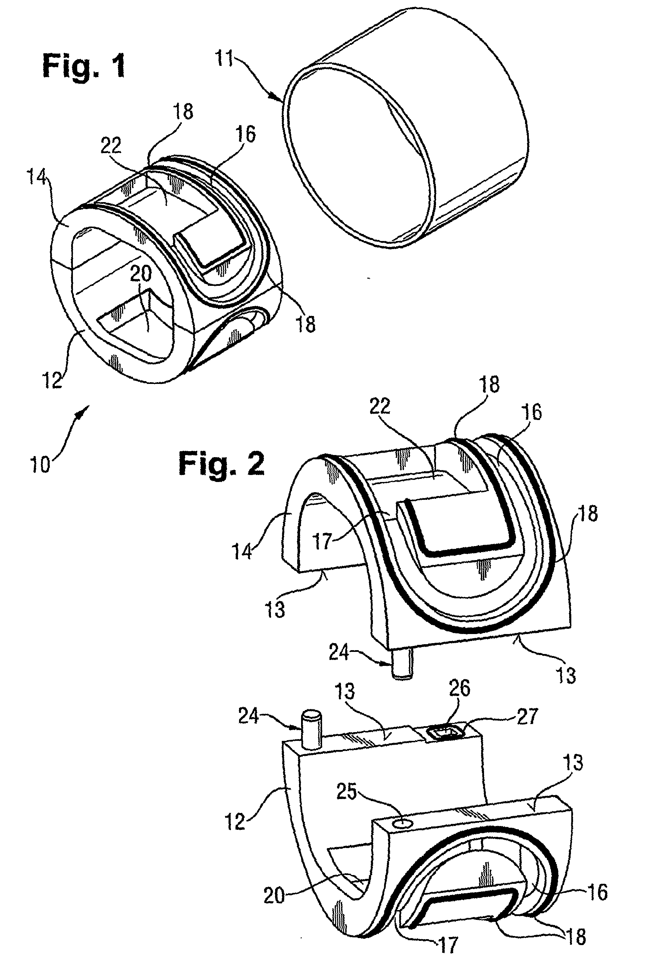

Fig. 1 zeigt eine perspektivische Ansicht eines Innenteils 10 einer erfindungsgemässen Lagerbuchse ohne Tragkörper 28 und Lagerkem 30. Das Innenteil 10 wird bei der Montage in das Buchsengehäuse 11 eingebracht. Dabei kann das Buchsengehäuse 11 hülsenförmig ausgebildet sein, wie in Fig. 1 dargestellt. Es kann jedoch auch in einem komplexen Bauteil eines Fahrzeuges integriert sein. Das Buchsengehäuse 11 begrenzt eine Arbeitskammer 20, eine Ausgleichskammer 22 sowie einen Kanal 16 des Innenteils 10. Die auf ein erstes Teil 12 und ein zweites Teil 14 aufgespritzten Kanaldichtungen 18 dichten das Innenteil 10 gegenüber dem Buchsengehäuse 11 ab.

Das Innenteil 10 ist in Horizontalrichtung in ein erstes Teil 12 und ein zweites Teil 14 unterteilt, die formschlüssig miteinander verbunden sind. Im zweiten Teil 14 ist im oberen Bereich eine Ausnehmung vorgesehen, die später beim Zusammenbau einen Teil der Ausgleichskammer 22 bildet. Im unteren Bereich des ersten Teils 12 ist ebenfalls eine Ausnehmung vorgesehen, die beim Zusammenbau teilweise die Arbeitskammer 20 bildet. Die Arbeitskammer 20 ist über den Kanal 16 mit der Ausgleichskammer 22 verbunden, wobei der Kanal 16 sowohl im ersten Teil 12 als auch im zweiten Teil 14 geführt wird und nach aussen offen ist. Der Kanal 16 wird seitlich von angespritzten Kanaldichtungen 18 begrenzt, die beim Zusammenbau eine Abdichtung zu dem Buchsengehäuse 11 bereitstellen.

In Fig. 2 sind das erste Teil 12 und das zweite Teil 14 des Innenteils 10 separat dargestellt. An Auflageflächen 13 des zweiten Teils 14 und des ersten Teils 12 sind jeweils Verbindungselemente 24 angeordnet, die in Aufnahmen 25 für die Verbindungselemente 24 des gegenüberliegenden zweiten Teils14 oder ersten Teils 12 eingreifen. Die Verbindungselemente 24 sind als Stifte ausgebildet, die in die Aufnahmen 25 in Form von Löchern eingreifen.

Weiter ist eine Kanalverbindung 26 vorgesehen, die an den Anlageflächen 13 der Teile 12, 14 angeordnet ist. Beim Übergang des Kanals 16 vom ersten Teil 12 zum zweiten Teil 14 ist die Kanalverbindung 26 angeordnet, über die die Flüssigkeit im Kanal 16 in das jeweils andere Teil 12, 14 geleitet wird, ohne dass die Flüssigkeit an dieser Stelle austreten kann. Der Kanal 16 ist in diesem Ausführungsbeispiel im Bereich des Übergangs vollständig vom zweiten Teil 14 und ersten Teil 12 umschlossen, wodurch die Kanalverbindung 26 flüssigkeitsdicht realisiert werden kann. Um die Kanalverbindung 26 ist entweder am zweiten Teil 14 oder am ersten Teil 12 oder an beiden eine Kanalverbindungsdichtung 27 angeordnet, die um die Kanalverbindung 26 herum verläuft.

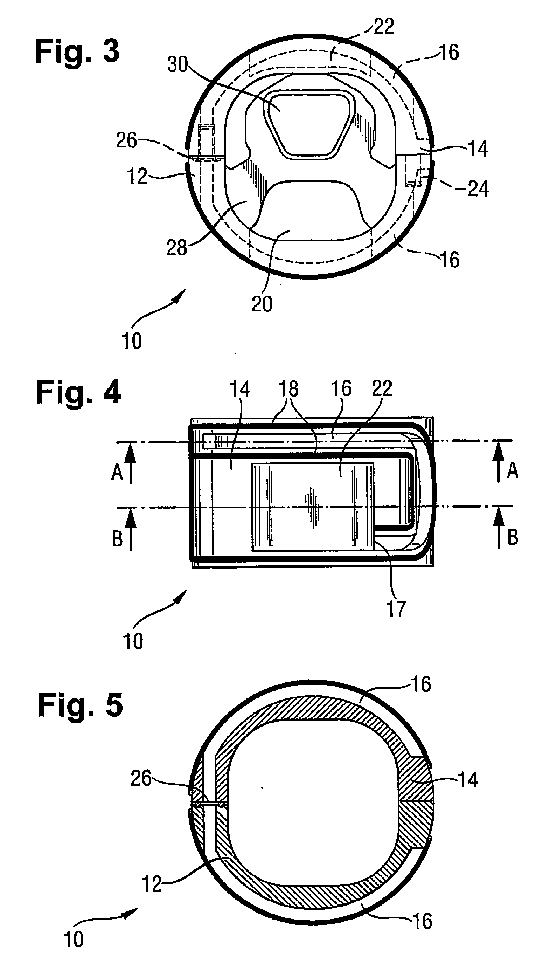

Fig. 3 zeigt eine Ansicht des Innenteils 10 von vorn mit Tragkörper 28 und Lagerkern 30. Die Arbeitskammer 20 wird von dem Tragkörper 28 begrenzt. Der im zweiten Teil 14 und ersten Teil 12 angeordnete Kanal 16, die Verbindungselemente 24 und die Kanalverbindung 26 sind mit Strichellinien dargestellt. Im Oberteil 22 wird vom Trag körper 28 und dem zweiten Teil 14 die Ausgleichskammer 22 gebildet, wobei zur Begrenzung der Ausgleichskammer 22 im oberen Bereich des zweiten Teils 14 eine hier nicht dargestellte Ausgleichsmembran 32 angeordnet ist, die die Ausgleichskammer 22 volumenweich abdichtet und ein Ausgleichen von Flüssigkeitsverschiebungen zwischen Arbeitskammer 20 und Ausgleichskammer 22 und somit eine Dämpfung ermöglicht.

Das Innenteil 10 ist in Fig. 4 in einer Ansicht von oben dargestellt. Dabei ist im zweiten Teil 14 eine Au snehmung erkennbar, die teilweise die Ausgleichskammer 22 bildet. Ausserdem ist ein Kanalaustritt 17 aus der Ausgleichskammer 22 dargestellt. Vom Kanalaustritt 17 verläuft der Kanal 16 um die Ausnehmung der Ausgleichskammer 22 herum zur nicht sichtbaren Kanalverbindung 26 und zum ersten Teil 12 des Innenteils 10.

Die Führung des Kanals 16 am Aussenumfang des Innenteils 10 ist in einer Schnittdarstellung gemäss Fig. 5 entlang der Schnittlinie A-A in Fig. 4 dargestellt. Dabei wird der Kanal 16 im Bereich des Übergangs vom zweiten Teil 14 zum ersten Teil 12 jeweils vollständig vom zweiten Teil und vom ersten Teil 14, 12 umschlossen und durch die Kanalverbindung 26 geführt.

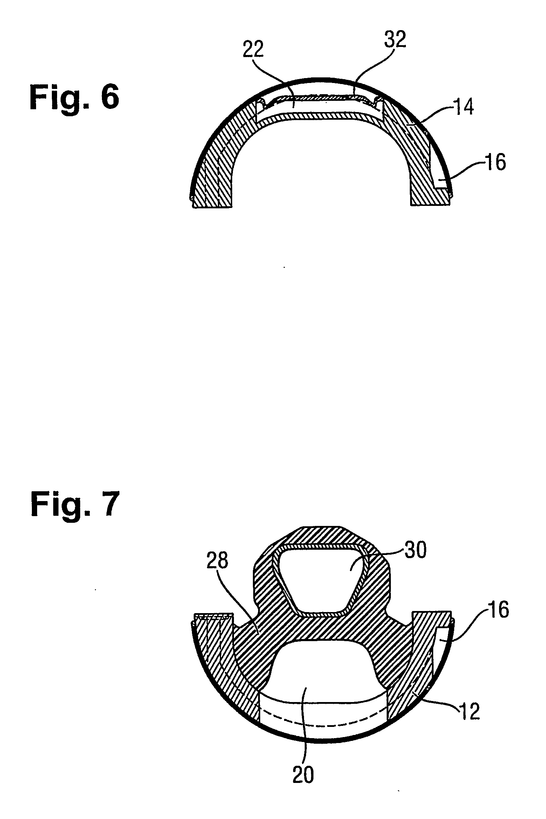

Der zweite Teil 14 wird in Fig. 6 in einer Schnittdarstellung entlang der Schnittlinie B-B aus Fig. 4 gezeigt. Dabei ist in der Ausnehmung für die Ausgleichskammer 22 im zweiten Teil 14 die volumenweiche Ausgleichsmembran 32 dargestellt. Bei einer fertig montierten Lagerbuchse wird somit zwischen Ausgleichsmembran 32 und Buchsengehäuse 11 ein Raum gebildet, der eine Ausdehnung der Ausgleichsmembran 32 bei Schwingungen der Flüssigkeitssäule im Kanal 16 ermöglicht.

Fig. 7 zeigt eine Schnittdarstellung des ersten Teils 12 entlang der Schnittlinie B-B aus Fig. 4. An dem ersten Teil 12 ist der Tragkörper 28 anvulkanisiert, die den Lagerkem 30 abstützt. Im unteren Bereich des Tragkörpers 28 wird von dem Trag körper 28 und dem ersten Teil 12 die Arbeitskammer 20 gebildet, die bei einer fertig montierten Lagerbuchse vom Buchsengehäuse 11 begrenzt wird.

Die separate Ausgestaltung des ersten Teils 12 und des zweiten Teils 14 ermöglicht die Verwendung verschiedener Elastomermaterialien bei ersten Teil 12 und zweiten Teil 14. So kann der an dem ersten Teil 12 angespritzte Tragkörper 28 aus Naturkautschuk und der an dem zweiten Teil 14 angespritzte Ausgleichsmembran 32 aus EPDM hergestellt werden, das sich durch eine hohe Ozonbeständigkeit auszeichnet.

Beim Zusammenbau von erstem und zweitem Teil 12, 14 ragt der Tragkörper 28 in den Innenbereich des zweiten Teils 14 hinein. Die Ausgleichskammer 22 wird von der volumenweichen Ausgleichsmembran 32, die im zweiten Teil 14 anvulkanisiert ist, begrenzt. Auch die Ausgleichskammer 22 ist mit dem im zweiten Teil 14 geführten Kanal 16 verbunden, so dass beim Einsetzen des Innenteils 10 in das Buchsengehäuse 11 eine abgedichtete Arbeits- und Ausgleichskammer gebildet werden, die über den abgedichteten Kanal 16 miteinander verbunden sind.

Der erste und zweite Teil 12, 14 sind aus Kunststoff mittels eines Spritzgussverfahrens oder aus Aluminium-Druckguss hergestellt.

### Bezugszeichenliste

- 10: Innenteil
- 11: Buchsengehäuse
- 12: erster Teil
- 13: Auflageflächen
- 14: zweiter Teil
- 16: Kanal
- 17: Kanalaustritt
- 18: Kanaldichtungen
- 20: Arbeitskammer
- 22: Ausgleichskammer
- 24: Verbindungselement
- 25: Aufnahme
- 26: Kanalverbindung
- 27: Kanalverbindungsdichtung
- 28: Tragkörper
- 30: Lagerkem
- 32: Ausgleichsmembran

## Patentansprüche

1. Hydraulisch dämpfende Lagerbuchse mit einem hülsenförmigen Innenteil (10), das in ein Buchsengehäuse (11) einführbar ist und an dem ein einteiliger Tragkörper (28) aus einem elastomeren Material angeordnet ist, der einen Lagerkem (30) abstützt, wobei eine flüssigkeitsgefüllte Arbeitskammer (20) und eine Ausgleichskammer (22) vorgesehen sind, die über einen Kanal (16) miteinander verbunden sind, und wobei die Ausgleichskammer (22) durch eine Ausgleichsmembran (32) aus einem elastomeren Material begrenzt ist und das Innenteil (10) in ein erstes Teil (12) und ein zweites Teil (14) unterteilt ist, **dadurch gekennzeichnet, dass** die beiden Teile (12, 14) jeweils halbschalenförmig ausgebildet und an sich gegen überliegenden Auflageflächen (13) miteinander verbunden sind und dass an dem ersten Teil (12) der Tragkörper (28) und an dem zweiten Teil (14) die Ausgleichsmembran (32) anvulkanisiert ist.

2. Lagerbuchse nach Anspruch 1, **dadurch gekennzeichnet, dass** das erste und das zweite Teil (12, 14) jeweils ein formschlüssiges Verbindungselement (24) und eine zugeordnete Aufnahme (25) für das Verbindungselement (24) aufweisen.

3. Lagerbuchse nach Anspruch 1 oder 2, **dadurch gekennzeichnet, dass** der in dem ersten und dem zweiten Teil (12, 14) eingebrachte Kanal (16) beim Zusammensetzen des ersten und zweiten Teils (12, 14) mittels einer Kanalverbindung (26) verbindbar ist.

4. Lagerbuchse nach einem der Ansprüche 1 bis 3, **dadurch gekennzeichnet, dass** die Kanalverbindung (26) eine Kanalverbindungsdichtung (27) aufweist.

5. Lagerbuchse nach einem der Ansprüche 1 bis 4, **dadurch gekennzeichnet, dass** der im ersten und zweiten Teil (12, 14) geführte Kanal (16) Kanaldichtungen (18) aufweist, die den Kanal (16) zum Buchsengehäuse (11) abdichten.

6. Lagerbuchse nach einem der Ansprüche 1 bis 5, **dadurch gekennzeichnet, dass** das erste und das zweite Teil (12, 14) identisch ausgebildet sind.

7. Lagerbuchse nach einem der Ansprüche 1 bis 6, **dadurch gekennzeichnet, dass** der Tragkörper (28) aus Naturkautschuk besteht.

8. Lagerbuchse nach einem der Ansprüche 1 bis 7, **dadurch gekennzeichnet, dass** die Ausgleichsmembran (32) aus EPDM besteht.

9. Lagerbuchse nach einem der Ansprüche 1 bis 8, **dadurch gekennzeichnet, dass** die Kanalverbindungsdichtung (27) und/oder die Kanaldichtungen (18) an das erste und das zweite Teil (12, 14) angespritzt sind.

10. Lagerbuchse nach einem der Ansprüche 1 bis 9, **dadurch gekennzeichnet, dass** der Tragkörper (28) des ersten Teils (12) beim Zusammenbau mit dem zweiten Teil (14) vorgespannt wird.

## Claims

1. A hydraulically damping bearing bushing, comprising a sleeve-like inner part (10) which is insertable in a bushing housing (11) and at which a one-piece carrying body (28) of an elastomeric material is arranged, which supports a bearing core (30), wherein a liquid-filled working chamber (20) and a compensation chamber (22) are provided, which are connected with each other via a passageway (16), and wherein the compensation chamber (22) is closed off by a compensation diaphragm (32) of an elastomeric material and the inner part (10) is subdivided into a first part (12) and a second part (14), **characterized in that** the two parts (12, 14) are each in the form of a half-shell and are joined to each other at facing supporting surfaces (13), and **in that** the carrying body (28) is cured onto the first part (12) and the compensation diaphragm (32) is cured onto the second part (14).

2. The bearing bushing according to claim 1, **characterized in that** the first and second parts (12, 14) each have a positively engaging joining element (24) and an associated receiving means (25) for the joining element (24).

3. The bearing bushing according to claim 1 or 2, **characterized in that** the passageway (16) formed in the first and second parts (12, 14) is connectable by means of a passageway connection (26), when the first and second parts (12, 14) are joined, together.

4. The bearing bushing according to any one of claims 1 to 3, **characterized in that** the passageway connection (26) has a passageway connection seal (27).

5. The bearing bushing according to any one of claims 1 to 4, **characterized in that** the passageway (16) extending in the first and second parts (12, 14) has passageway seals (18) sealing the passageway (16) with respect to the bushing housing (11).

6. The bearing bushing according to any one of claims 1 to 5, **characterized in that** the first and second parts (12, 14) are identically formed.

7. The bearing bushing according to any one of claims 1 to 6, **characterized in that** the carrying body (28) is of natural rubber.

8. The bearing bushing according to any one of claims 1 to 7, **characterized in that** the compensation diaphragm (32) is of EPDM.

9. The bearing bushing according to any one of claims 1 to 8, **characterized in that** the passageway connection seal (27) and/or the passageway seals (18) are injection moulded onto the first and second parts (12, 14).

10. The bearing bushing according to any one of claims 1 to 9, **characterized in that** the carrying body (28) of the first part (12) is biased when it is assembled with the second part (14).

## Revendications

1. Douille-palier à amortissement hydraulique, comprenant une partie intérieure (10) en forme de manchon, susceptible d'être introduite dans un boîtier de douille (11) et agencée sur un corps porteur (28) d'une seule pièce, en matériau élastomère, qui supporte un noyau de palier (30), dans laquelle sont prévues une chambre de travail (20) remplie de liquide et une chambre de compensation (22), lesquelles sont reliées l'une à l'autre via un canal (16), et dans laquelle la chambre de compensation (22) est délimitée par une membrane de compensation (32) en matériau élastomère et la partie intérieure (10) est subdivisée en une première partie (12) et une deuxième partie (14), **caractérisée en ce que** les deux parties (12, 14) sont réalisées chacune en forme de demi-coque et sont reliées l'une à l'autre au niveau des surfaces d'appui opposées (13), et **en ce que** le corps porteur (28) est vulcanisé sur la première partie (12) et que la membrane de compensation (32) est vulcanisée sur la deuxième partie (14).

2. Douille-palier selon la revendication 1, **caractérisée en ce que** la première et la seconde partie (12, 14) comprennent chacune un élément de liaison (24) à coopération de formes, et un logement associé (25) pour l'élément de liaison (24).

3. Douille-palier selon la revendication 1 ou 2, **caractérisée en ce que** le canal (16) ménagé dans la première et la deuxième partie (12, 14) est susceptible d'être relié au moyen d'une jonction de canal (26) lors de l'assemblage de la première et de la deuxième partie (12, 14).

4. Douille-palier selon l'une des revendications 1 à 3, **caractérisée en ce que** la jonction de canal (26) comprend un joint de liaison (27).

5. Douille-palier selon l'une des revendications 1 à 4, **caractérisée en ce que** le canal (16) guidé dans la première et dans la deuxième partie (12, 14) comprend des joints (18) qui étanchent le canal (16) vis-à-vis du boîtier de douille (11).

6. Douille-palier selon l'une des revendications 1 à 5, **caractérisée en ce que** la première et la deuxième partie (12, 14) sont réalisées identiquement.

7. Douille-palier selon l'une des revendications 1 à 6, **caractérisée en ce que** le corps porteur (28) est en caoutchouc naturel.

8. Douille-palier selon l'une des revendications 1 à 7, **caractérisée en ce que** la membrane de compensation (32) est en EPDM.

9. Douille-palier selon l'une des revendications 1 à 8, **caractérisée en ce que** le joint de liaison (27) et/ou les joints (18) de canal sont enrobés sur la première et la deuxième partie (12, 14).

10. Douille-palier selon l'une des revendications 1 à 9, **caractérisée en ce que** le corps porteur (28) de la première partie (12) est précontraint lors de l'assemblage avec la deuxième partie (14).
